# EUROPEAN PATENT APPLICATION

(11) **EP 2 579 125 A1**
(43) Date of publication of application: **10.04.2013**
(21) Application number: 12187291.5
(22) Date of filing: 04.10.2012
(51) Int. Cl.: G06F 1/32, G06F 3/12, H04L 12/10, H04L 12/12, H04L 12/40

(54) **Method and apparatus to control link speed of an image forming apparatus**

(30) Priority: 05.10.2011 KR 20110101491
(71) Applicant: Samsung Electronics Co., Ltd, Gyeonggi-do 443-742 (KR)
(72) Inventor: Park, Hyun-wook, Gyeonggi-do (KR); Kim, Jin-hyung, Gyeonggi-do (KR)
(74) Representative: Walaski, Jan Filip

(57) **Abstract**

A method of controlling a link speed in an image forming apparatus to reduce power consumption of the image forming apparatus by changing the link speed of the image forming apparatus, the method including establishing a link between the image forming apparatus and an external device in a normal mode of the image forming apparatus, determining whether a network environment of the image forming apparatus, which is reconfigured by changing a speed of the established link, satisfies at least one predetermined condition, and disabling a function of changing the speed of the established link in a sleep mode of the image forming apparatus, based on a result of the determining.

## Description

The present invention relates to an image forming apparatus, and more particularly, to network communication of an image forming apparatus.

As global warming has attracted much attention as a serious environmental issue, a variety of methods of reducing carbon dioxide emission in the earth's atmosphere have been considered. One of these methods is to develop an environmentally friendly network printer having low carbon dioxide emission. In general, an operation mode of an environmentally friendly network printer is classified into a normal mode in which the printer operates at normal power and a sleep mode or a standby mode in which the printer operates at low power. In addition, a variety of methods of reducing power consumption in a network printer in a sleep mode in which a network printer is on standby while not being used by a user, have been developed.

Exemplary embodiments of the present invention provide a method and apparatus to minimize and/or prevent side effects caused by changing a link speed in a sleep mode of an image forming apparatus. Exemplary embodiments of the present invention also provide a computer readable recording medium having recorded thereon a program for executing the method. The present invention is not limited to these exemplary embodiments, and other embodiments can be inferred from the specification.

Additional features and utilities of the present invention will be set forth in part in the description which follows and, in part, will be obvious from the description, or may be learned by practice of the invention.

Exemplary embodiments of the present invention provide a method of controlling a link speed in an image forming apparatus to reduce power consumption of the image forming apparatus by changing the link speed of the image forming apparatus, the method including establishing a link between the image forming apparatus and an external device in a normal mode of the image forming apparatus, determining whether a network environment of the image forming apparatus, which is reconfigured by changing a speed of the established link, satisfies at least one predetermined condition, and disabling a function of changing the speed of the established link in a sleep mode of the image forming apparatus, based on a result of the determining.

Exemplary embodiments of the present invention also provide a computer readable recording medium having recorded thereon a program for executing a method of controlling a link speed in an image forming apparatus to reduce power consumption of the image forming apparatus by changing the link speed of the image forming apparatus, the method including establishing a link between the image forming apparatus and an external device in a normal mode of the image forming apparatus, determining whether a network environment of the image forming apparatus, which is reconfigured by changing a speed of the established link, satisfies at least one predetermined condition, and disabling a function of changing the speed of the established link in a sleep mode of the image forming apparatus, based on a result of the determining.

Exemplary embodiments of the present invention also provide an apparatus to control a link speed in an image forming apparatus to reduce power consumption of the image forming apparatus by changing the link speed of the image forming apparatus, the apparatus including a network interface to establish a link between the image forming apparatus and an external device in a normal mode of the image forming apparatus, and a processor to determine whether a network environment of the image forming apparatus, which is reconfigured by changing a speed of the established link, satisfies at least one predetermined condition, and to disable a function to change the speed of the established link in a sleep mode of the image forming apparatus, based on a result of the determination.

These and/or other features and utilities of the present invention will become apparent and more readily appreciated from the following description of the embodiments, taken in conjunction with the accompanying drawings of which:
FIG. 1 is a diagram illustrating a network environment of a network printer according to exemplary embodiments of the present invention;
FIG. 2 is a structural diagram illustrating a network printer according to exemplary embodiments of the present invention;
FIG. 3 is a flowchart illustrating a method of controlling a link speed in a normal mode of a network printer, according to exemplary embodiments of the present invention;
FIG. 4 is a flowchart illustrating a method of controlling a link speed when a network printer enters a sleep mode, according to exemplary embodiments of the present invention;
FIG. 5 is a flowchart illustrating a method of controlling a link speed in a normal mode of the network printer of FIG. 3, according to exemplary embodiments of the present invention;
FIG. 6 is a flowchart illustrating a method of controlling a link speed in a normal mode of the network printer of FIG. 3, according to exemplary embodiments of the present invention;
FIG. 7 is a flowchart illustrating a method of controlling a link speed in a normal mode of the network printer of FIG. 3, according to exemplary embodiments of the present invention;
FIG. 8 is a block diagram illustrating the network printer of FIG. 2, according to exemplary embodiments of the present invention;
FIG. 9 is a block diagram illustrating a software stack stored in a storage unit of FIG. 8, according to exemplary embodiments of the present invention;
FIG. 10 is a diagram illustrating a display screen displayed by a user interface of the network printer, according to exemplary embodiments of the present invention;

Reference will now be made in detail to the embodiments of the present r, examples of which are illustrated in the accompanying drawings, wherein like reference numerals refer to the like elements throughout. The embodiments are described below in order to explain the present invention while referring to the figures.

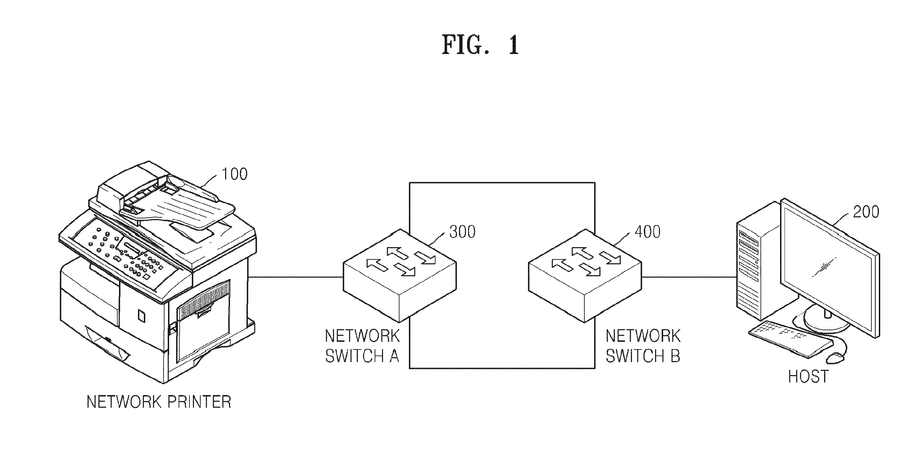

In particular, as an example of an image forming apparatus defined by the claims and illustrated as network printer 100 in FIGS. 1, 2, and 8, a network printer having a network communication function as well as a printing function of forming a physical image on paper, a scanning function of detecting an image recorded on paper, or the like will be described with regard to exemplary embodiments of the present invention. However, the network printer may be referred to as another term such as a multifunctional peripheral (MFP) or the like. In addition, the image forming apparatus defined by the claims may be applied to a different type of image forming apparatus other than the network printer to be described below.

FIG. 1 is a diagram illustrating a network environment including a network printer 100 according to exemplary embodiments of the present invention. FIG. 1 illustrates an MFP having a printing function, a scanning function, or the like as an example of the network printer 100. However, FIG. 1 is just an example, and thus, the network printer 100 may be a different type of printer other than an MFP, such as a printer without a scanning function. FIG. 1 illustrates a personal computer (PC) as a host 200. However, FIG. 1 is just an example, and thus, the host 200 may be a different type of host other than a PC, such as a notebook computer, a laptop computer, a tablet computer, a mobile phone, a server, a media player, a set top box, and/or any suitable host to carry out the exemplary embodiments of the present invention disclosed herein. The network printer 100 and the host 200 are connected to each other, via a wired and/or wireless communication link, through a network switch A 300 and a network switch B 400. In general, when a plurality of nodes such as the network printer 100, the host 200, and the like are included in a network, a network switch (such as network switch A 300 and/or network switch B 400) receives data transmitted from a node and transmits the data to only a node that desires to receive the data. In order to perform the receiving and transmitting of data between nodes, a network switch can have a media access control (MAC) of each node existing on a network. However, the above-described network switch is just an example and may be replaced by a network hub, a network bridge, or the like so as to carry out the exemplary embodiments of the present invention as disclosed herein.

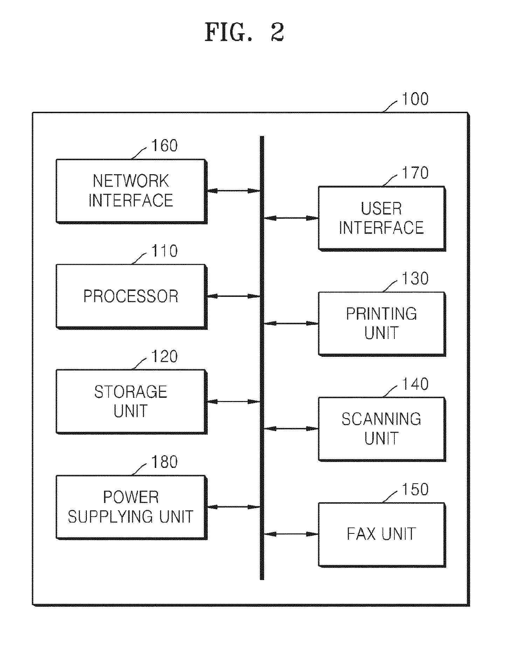

FIG. 2 is a structural diagram illustrating the network printer 100 according to exemplary embodiments of the present invention. Referring to FIG. 2, the network printer 100 includes a processor 110, a storage unit 120, a printing unit 130, a scanning unit 140, a fax unit 150, a network interface 160, a user interface 170, and a power supplying unit 180. Hardware components illustrated in FIG. 2 are just examples of components of the network printer 100. For example, the network printer 100 may not include some hardware components illustrated in FIG. 2, for example, hardware components such as the scanning unit 140, the fax unit 150, the user interface 170, and so on and may further include other hardware components.

The processor 110 may be a microprocessor, a controller, and integrated circuit, a programmable logic device, a field programmable gate array, a controller, and/or any suitable processor to carry out the exemplary embodiments of the present invention as disclosed herein. The processor 110 boots the network printer 100 by starting firmware stored in the storage unit 120, such as an operating system, a device driver, and the like when power is supplied to the network printer 100. When the booting operation is terminated, the processor 110 may control operations of hardware components of the network printer 100, such as the storage unit 120, the printing unit 130, the scanning unit 140, the fax unit 150, the network interface 160, the user interface 170, the power supplying unit 180, and the like by executing an application program stored in the storage unit 120. The processor 110 may be embodied as a single chip or may be embodied as a plurality of separate chips such as central processing unit (CPU), a dedicated processor, and the like. The dedicated processor may be a processor that is responsible only for a predetermined operation of the network printer 100 and may be, for example, a network processor for processing data packets that are transmitted through a network.

The storage unit 120 stores and provides data according to control of the processor 110. Firmware such as an operating system, a device driver, or the like, an execution program such as an application program or the like, and a variety of data such as a text to be requested to be printed by the printing unit 130 and contents such as image may be stored in the storage unit 120. The storage unit 120 may be embodied as a single storage medium such as a flash memory that is a kind of non-volatile memory or may be embodied as various separate storage media such as a random access memory (RAM), a read only memory (ROM), a hard disk, a solid state drive, a flash memory, and the like.

The printing unit 130 prints text, images, and the like stored in the storage unit 120 according to control of the processor 110. The printing unit 130 may be divided into a mechanical unit to move paper and/or a printing medium, a printing engine unit to form an image on the paper, and so on. The scanning unit 140 detects the image formed on the paper and/or printing medium inserted into the scanning unit 140 according to control of the processor 110. The scanning unit 140 may be divided into an image sensor to detect an image formed on paper, a mechanical unit to move the image sensor, and so on. The fax unit 150 transmits and receives text, images, and the like through a public switched telephone network (PSTN). Detailed structures and operations of the printing unit 130, the scanning unit 140, and the fax unit 150 are not characteristic features of the exemplary embodiments of the present invention and are known to the art. Thus, their detailed description will be omitted.

The network interface 160 performs network communication with other devices such as the host 200 or the like through a wired and/or wireless communications link with the network switch A 300 according to control of the processor 110. For example, the network interface 160 may receive contents transmitted from the host 200 and a printing instruction about the contents and may transmit a response indicating a processing result of the content to the host 200. The network interface 160 may be divided into a mechanical unit such as a connector to which a communication cable such as a network cable is inserted, for example, an RJ45 connector to which an Ethernet cable is inserted, and a circuit unit to control data transmission by using one or more communication methods such as a network communication standard, for example, an Ethernet communication standard, a wireless local area network (LAN) communication standard, or the like.

The user interface 170 interfaces between a user and the network printer 100 according to control of the processor 110. For example, the user interface 170 transmits an instruction or information to the processor 110 when a user inputs the instruction or the information to the user interface 170. In general, since a printer is designed as an embedded system having limited resources for processing a printing process or a scanning operation, general input/output devices such as a mouse, a keyboard, a monitor, and the like may not be installed in the printer. Thus, the user interface 170 may be a touch screen or a small liquid crystal display (LCD) screen, and/or may include one or more input buttons.

The processor 110 can control the operations of hardware components of the network printer 100 in two modes, a normal mode and a sleep mode, to reduce power consumption of the network printer 100. According to exemplary embodiments of the present invention, the normal mode is a mode in which the network printer 100 operates at normal power, power is supplied to all hardware components (e.g., the storage unit 120, the printing unit 130, the scanning unit 140, the fax unit 150, the network interface 160, the user interface 170, and the power supplying unit 180), and the all hardware components perform all their respective functions at a predetermined performance level (e.g., at a maximum performance level). The sleep mode is a mode in which the network printer 100 operates at lower power than the normal power, power is supplied to one or more of the hardware components (e.g., one or more of the storage unit 120, the printing unit 130, the scanning unit 140, the fax unit 150, the network interface 160, the user interface 170, and the power supplying unit 180), and one or more hardware components perform predetermined basic functions at a predetermined basic performance level (e.g., where the predetermined basic performance level may be less than a maximum performance level).

The network interface 160 establishes a link between the network printer 100 and the network switch A 300 according to control of the processor 110. When the processor 110 boots the network printer 100 and the network printer 100 operates in the normal mode, the network interface 160 determines a communication speed and a communication mode between the network printer 100 and the network switch A 300, based on communication capabilities of the network printer 100 and the network switch A 300 and establishes a link that supports the determined communication speed and communication mode. For example, the network interface 160 may determine a communication speed and a communication mode between the network printer 100 and the network switch A 300 by performing an auto negotiation operation with the network switch A 300.

The auto negotiation operation is performed as follows. The network interface 160 of the network printer 100 exchanges information about communication capability (e.g., full duplex or half duplex communication, data communication rate, etc.) of the network switch A 300 with the other party (e.g., the host 200). The network interface 160 determines a maximum communication speed and a communication mode that are capable of being simultaneously supported by the network printer 100 and the network switch A 300, based on the information exchanged with the network switch A 300. For example, when the network printer 100 and the network switch A 300 are capable of being simultaneously supporting a full duplex mode having a speed of 100 Mbps (Megabits per second) and a half duplex mode having a speed of 10 Mbps, the network interface 160 selects the full duplex mode having a speed of 100 Mbps and establishes a link supporting the full duplex mode having a speed of 100 Mbps.

The processor 110 reduces a link speed between the network printer 100 and the network switch A 300 as a predetermined minimum speed in order to reduce power consumption of the network printer 100 in the sleep mode. When the link speed between the network printer 100 and the network switch A 300 is greater that a predetermined link speed, since a predetermined large amount of data is transmitted between the network printer 100 and the network switch A 300 for a predetermined short period of time and a predetermined largest amount of data needs to be processed for the predetermined short period of time, power consumption of the network printer 100 is increased. In the network interface 160, a unit to process data of the full duplex mode having a speed of 100 Mbps and a unit processing data of the half duplex mode having a speed of 10 Mbps, may be embodied as a separate circuit and/or algorithm that is stored in the storage unit 120 and is executed by the processor 110. If the link speed between the network printer 100 and the network switch A 300 is changed, a previous link between the network printer 100 and the network switch A 300 based on the data processing portion may not be effective any more. Thus, when the link speed between the network printer 100 and the network switch A 300 is changed, a link between the network printer 100 and the network switch A 300 may be re-established according to another data processing setting that supports the changed link speed. In this case, the link between the network printer 100 and the network switch A 300 refers to a logic link of a data link layer that is a second layer of an open system interconnection (OSI) model and is different from a physical link such as a communication cable or the like.

When the link between the network printer 100 and the network switch A 300 is re-established, a network environment of the network printer 100 may be reconfigured. However, according to the reconfigured network environment of the network printer 100, there may be an increased disadvantage due to reconfiguring the network environment of the network printer 100 compared with an advantage of reducing power consumption due to a reduction in the link speed between the network printer 100 and the network switch A 300. For example, if an amount of time greater than a predetermined amount of time is used to reconfigure the network environment of the network printer 100, a printing operation may not be available by using the network printer 100 due to disconnection of a network of the network printer 100. This case may occur with a frequency that is greater than a predetermined frequency.

As described above, since the link between the network printer 100 and the network switch A 300 belongs to a data link layer, if the link between the network printer 100 and the network switch A 300 is disconnected, a network layer, a transport layer, and the like, which belong to an upper layer of the data link layer, may be disconnected from each other. Thus, when the link between the network printer 100 and the network switch A 300 is re-established, the connection of the network layer, the transport layer, and the like may be re-established based on a new link. The reestablishment of the connection of the upper layer may cause confusion to a user, in particular, if manual operation by the user is to be performed to re-establish the connection.

Cases where the disadvantage of reconfiguring the network environment of the network printer 100 is greater than the advantage of reducing power consumption due to a reduction in the link speed between the network printer 100 and the network switch A 300 are predefined as one or more conditions. When the network environment of the network printer 100 reconfigured due to disconnection of the link between the network printer 100 and the network switch A 300 satisfies the one or more predefined conditions, the processor 110 disables a function of changing a link speed in the sleep mode. When the reconfigured network environment of the network printer 100 does not satisfy the one or more predetermined conditions, the processor 110 enables the function of changing the link speed in the sleep mode.

A device to control the link speed of the network printer 100 may include the processor 110 and the network interface 160. The device to control the link speed of the network printer 100 may include hardware and/or software. When the device to control the link speed of the network printer 100 is embodied as hardware, the processor 110 may be included as general hardware components of the network printer 100, for example, a central processing unit (CPU) that is a general-use processor to control the printing unit 130, and a separate dedicated processor to perform control operations of the above-described link speed. When the device to control the link speed of the network printer 100 is embodied as software, an application program to execute control operations of the above-described link speed may be stored in the storage unit 120 and the processor 110 may execute the application program.

The power supplying unit 180 of the network printer 100 supplies power to hardware components illustrated in FIG. 2, for example, the storage unit 120, the printing unit 130, the scanning unit 140, the fax unit 150, the network interface 160, and the user interface 170 according to control of the processor 110. In more detail, the power supplying unit 180 supplies power to all hardware components in the normal mode according to control of the processor 110 and supplies power to one or more hardware components (e.g., only some hardware components) in the sleep mode.

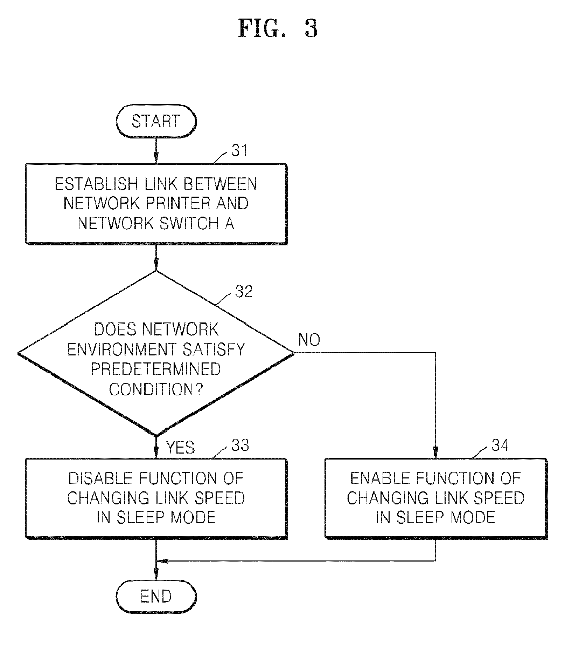

FIG. 3 is a flowchart illustrating a method of controlling a link speed in a normal mode of the network printer 100, according to exemplary embodiments of the present invention. The method illustrated in FIG. 3 includes operations that may be performed (e.g., sequentially performed) by the network printer 100 of FIG. 2. Thus, although omitted below, the above-described detailed description of the network printer 100 of FIG. 2 is can be applied to the method illustrated in FIG. 3.

In operation 31, the network printer 100 establishes the link between the network printer 100 and the network switch A 300 in the normal mode of the network printer 100. In operation 32, the network printer 100 determines whether the network environment of the network printer 100, which is reconfigured by changing a speed of the established link, satisfies at least one predetermined condition. In operation 33, when the network printer 100 determines that the network environment satisfies a predetermined condition in operation 32, the network printer 100 disables a function of changing the link speed in a sleep mode of the network printer 100. In operation 34, when the network printer 100 determines that the network environment does not satisfy a predetermined condition in operation 32, the network printer 100 enables the function of changing the link speed in the sleep mode of the network printer 100. Thus, in operation 32, the network printer 100 determines ahead in the normal mode of the network printer 100, whether the network environment in the sleep mode of the network printer 100 satisfies at least one predetermined condition. Accordingly, the term "determine" may be replaced with the term "predict" or a similar expression.

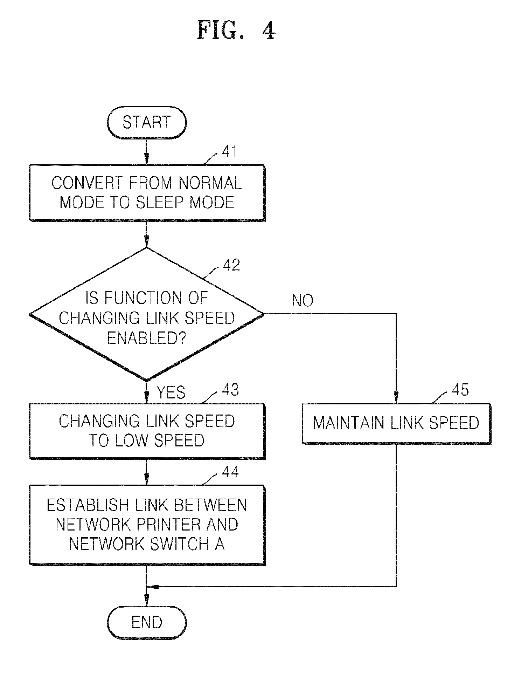

FIG. 4 is a flowchart illustrating a method of controlling a link speed when the network printer 100 enters a sleep mode, according to exemplary embodiments of the present invention. The method illustrated in FIG. 4 includes operations to control a link speed, which may be performed (e.g., sequentially performed) by the network printer 100 of FIG. 2. Thus, although omitted below, the above-described detailed description of the network printer 100 of FIG. 2 is also applied to the method illustrated in FIG. 4.

In operation 41, the network printer 100 converts an operation mode of the network printer 100 from a normal mode to a sleep mode. In operation 42, the network printer 100 determines whether a function of changing a link speed in the sleep mode is enabled. In operation 43, when the network printer 100 confirms that the function of changing the link speed is enabled in operation 42, a link speed between the network printer 100 and the network switch A 300 is changed to a speed that is less than or equal to a predetermined speed (i.e., a low speed). That is, the link speed between the network printer 100 and the network switch A 300 is reduced. In operation 44, the network printer 100 establishes the link between the network printer 100 and the network switch A 300, which support the link speed that is changed in operation 43. In operation 45, when the network printer 100 confirms that the function changing the link speed in the sleep mode is disabled in operation 42, the link speed between the network printer 100 and the network switch A 300 is maintained. When the link between the network printer 100 and the network switch A 300 is not changed, the link between the network printer 100 and the network switch A 300 is not disconnected. That is, when the link between the network printer 100 and the network switch A 300 is not changed, the link between the network printer 100 and the network switch A 300 is maintained. When the above-described operations are completed, the network printer 100 enters the sleep mode.

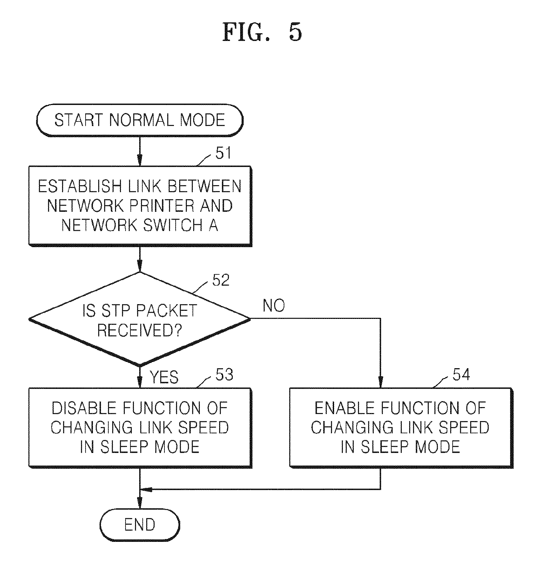

FIG. 5 is a flowchart illustrating a method of controlling a link speed in a normal mode of the network printer 100 of FIG. 3, according to exemplary embodiments of the present invention. In operation 51, the network printer 100 establishes the link between the network printer 100 and the network switch A 300 in the normal mode of the network printer 100. In operation 52, the network printer 100 determines whether a network environment of the network printer 100, which is reconfigured by changing a speed of the link established in operation 51, is a network environment of which reconfiguration is postponed by a certain protocol that is driven whenever the link speed between the network printer 100 and the network switch A 300 is changed. An example of the protocol may be a spanning tree protocol (STP) for preventing looping that occurs between the network switch A 300 and the network switch B 400.

In FIG. 1, when the network printer 100 broadcasts a packet, the network switch A 300 receives the packet from the network printer 100 and broadcasts the packet again. The network switch B 400 can receive the packet from the network switch A 300 and can broadcast the packet again. The network switch A 300 receives the packet from the network switch B 400 and broadcasts the packet again. The broadcasting operation is repeatedly performed, which is also referred to as looping. In order to minimize and/or prevent this looping, the network switch A 300 generates a spanning tree including nodes on a network by driving a STP and searches for two links or more, where looping may occur, by using a spanning tree. As illustrated in FIG. 1, two lines between the network switch A 300 and the network switch B 400 are an example of the two links or more. The network switch A 300 may minimize and/or prevent looping by permitting any one of the found links and blocking the remaining links. When the STP is driven, a network environment of the network printer 100 is reconfigured so that it takes a long time of 20 seconds to 60 seconds to restart the network communication of the network printer 100.

During the driving of the STP, the network switch A 300 multicasts a STP packet in order to collect information for generating a spanning tree. Thus, when the network printer 100 receives the STP packet, the network printer 100 may determine that a network environment of the network printer 100, which is reconfigured by changing a speed of the link established in operation 51 is a network environment of which reconfiguration is postponed by the STP. That is, in operation 52, the network printer 100 monitors whether the STP packet exists from among packets received from the network switch A 300. When it is confirmed that the STP packet is received, from the monitoring result, the network printer 100 determines that the network environment of the network printer 100, which is reconfigured by changing the speed of the link established in operation 51, is the network environment of which reconfiguration is postponed by a STP.

In operation 53, when the network printer 100 determines that the network environment of the network printer 100, which is reconfigured by changing the speed of the link established in operation 52, is the network environment of which reconfiguration is postponed by a STP, in operation 52, for example, when it is confirmed that a STP packet is received, the network printer 100 disables a function of changing the link speed in a sleep mode of the network printer 100. In operation 54, when the network printer 100 determines that the network environment of the network printer 100, which is reconfigured by changing the speed of the link established in operation 51, is not the network environment of which reconfiguration is postponed by a STP, in operation 52, for example, when it is confirmed that a STP packet is not received, the network printer 100 enables the function of changing the link speed in the sleep mode of the network printer 100. That is, when it is confirmed that the STP packet is received, the network printer 100 disables a function of changing the link speed in a sleep mode of the network printer 100, and when it is confirmed that a STP packet is not received, the network printer 100 enables the function of changing the link speed in the sleep mode of the network printer 100.

In more detail, at least a portion of the storage unit 120 may be assigned to a flag in which a value indicating whether the STP packet is received is recorded. The network printer 100 may change a link speed of the network printer 100 with reference to the value of the flag in a sleep mode. For example, a function of changing the link speed in the sleep mode of the network printer 100 may be disabled by setting the value of the flag to the value indicating that the STP packet is received. The function of changing the link speed in the sleep mode of the network printer 100 may be enabled by setting the value of the flag to another value.

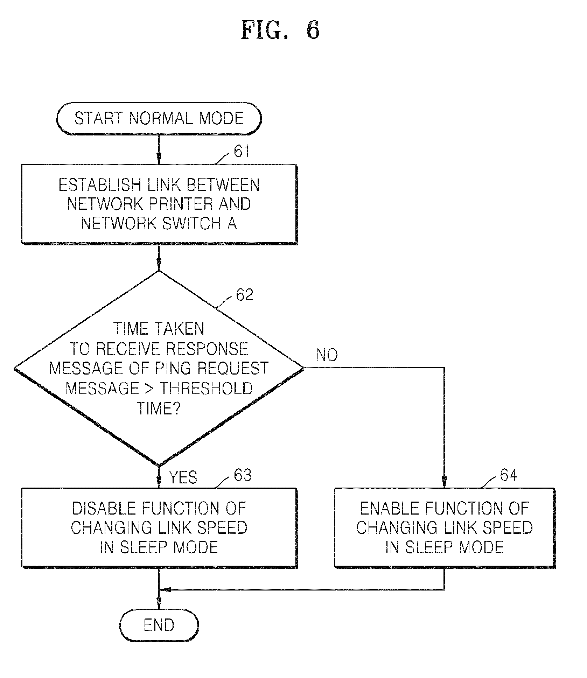

FIG. 6 is a flowchart illustrating a method of controlling a link speed in a normal mode of the network printer 100 of FIG. 3, according to exemplary embodiments of the present invention. In operation 61, the network printer 100 establishes the link between the network printer 100 and the network switch A 300 in the normal mode of the network printer 100. In operation 62, the network printer 100 determines whether a network environment of the network printer 100, which is reconfigured by changing a speed of the link established in operation 51 is a network environment of which reconfiguration is postponed due to the postponement of the restart of the network communication of the network printer 100, which is disconnected whenever the link speed between the network printer 100 and the network switch A 300 is changed. When the link speed between the network printer 100 and the network switch A 300 is changed, the current link is disconnected, and the network communication of the network printer 100 is also disconnected. When a new link is established between the network printer 100 and the network switch A 300, the network communication of the network printer 100 is restarted, which may be postponed due to one or more factors, as described below.

Examples of the factors may include a response speed of a network environment of the network printer 100. In order to reconfigure the network environment of the network printer 100, the network printer 100 may exchange one or more messages with another device, for example, the network switch A 300 and/or the host 200. However, when the response speed of the network environment of the network printer 100 is less than a predetermined response speed, the reconfiguration of the network environment of the network printer 100 may be postponed. The response speed of the network environment of the network printer 100 may be estimated by measuring a period of time between transmission of a message and receipt of a response message thereof. In order to measure the response speed of the network environment, a ping to test whether a message can reach a destination device can be used. For example, the network printer 100 may transmit a ping request message to an external device such as a gateway or the like and may measure a period of time between transmission of the ping request message and receipt of a response message thereof after the response message of the ping request message is received. The ping request message may be, for example, an Internet control message protocol (ICMP) echo request packet.

Thus, when the period of time between transmission of the ping request message and receipt of the response message thereof is greater than a threshold time, for example, 10 seconds, the network printer 100 may determine that the network environment of the network printer 100, which is reconfigured by changing a speed of the link established in operation 61 is a network environment of which reconfiguration is postponed due to the postponement of the restart of the network communication of the network printer 100. That is, in operation 62, when the network printer 100 transmits the ping request message and receives the response message of ping request message, the network printer 100 may measure a time taken to receive the response message. According to the measurement result, when the time taken to receive the response message is greater than the threshold time, the network printer 100 may determine that the network environment of the network printer 100, which is reconfigured by changing a speed of the link established in operation 61, is the network environment of which reconfiguration is postponed due to the postponement of the restart of the network communication of the network printer 100.

In operation 63, when the network printer 100 determines that the network environment of the network printer 100 is the network environment of which reconfiguration is postponed due to the postponement of the restart of the network communication of the network printer 100 in operation 62, for example, when the time taken to receive the response message is greater than the threshold time, a function to change a link speed in a sleep mode of the network printer 100 is disabled. In operation 64, when the network printer 100 determines that the network environment of the network printer 100 is not the network environment of which reconfiguration is postponed due to the postponement of the restart of the network communication of the network printer 100 in operation 62, for example, when the time taken to receive the response message is not greater than the threshold time, the function to change a link speed in a sleep mode of the network printer 100 is enabled. That is, the function to change the link speed in the sleep mode of the network printer 100 is enabled or disabled according to a comparison between the time taken to receive a response message (e.g., a response message of a ping request message) and a threshold time.

In more detail, a portion of the storage unit 120 may be assigned to a flag in which a value indicating whether the time taken to receive the response message is greater than the threshold time is recorded. For example, the function to change the link speed in the sleep mode of the network printer 100 is disabled by setting the flag as a value indicating that the time taken to receive the response message is greater than the threshold time. The function to change the link speed in the sleep mode of the network printer 100 is enabled by setting the value of the flag as another value.

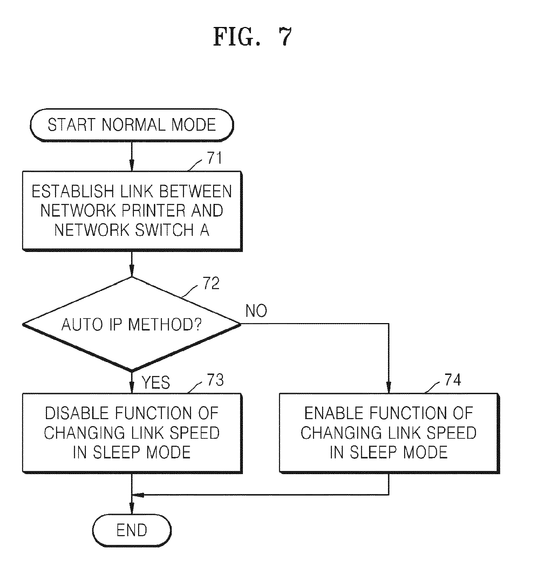

FIG. 7 is a flowchart illustrating a method of controlling a link speed in a normal mode of the network printer 100 of FIG. 3, according to exemplary embodiments of the present invention. In operation 71, the network printer 100 establishes the link between the network printer 100 and the network switch A 300 in the normal mode of the network printer 100. In operation 72, the network printer 100 determines whether a network environment of the network printer 100, which is reconfigured by changing a speed of the link established in operation 51 is a network environment that supports an auto Internet protocol (IP) method of automatically generating an IP address of the network printer 100 whenever the link speed between the network printer 100 and the network switch A 300 is changed. When the link speed between the network printer 100 and the network switch A 300 is changed, the current link is disconnected. That is, a network layer, a transport layer, and the like, which belong to an upper layer of the data link layer, may be disconnected from each other when the current link is disconnected. IP addresses are respectively assigned to devices on a network to identify the devices in the network layer.

An example of a method of assigning an IP address may include a dynamic host configuration protocol (DHCP), a bootstrap protocol (BOOTP), a static IP method, an auto IP method, and the like. The DHCP method and the BOOTP method are each exemplary methods of assigning an IP address by an external server. The static IP method is a method of manually inputting an IP address by a user. The auto IP method is defined in Request For Comments (RFC) 3927 and a device itself that intends to use an automatically generated IP address. In the auto IP method, when network layers of the network printer 100 and the host 200 are disconnected from each other and connected again, the network printer 100 generates a random IP address and determines whether a new IP address is the same as an IP address of another device on a network. When the network printer 100 confirms that the new IP address is not the same as another IP address of another device, the network printer 100 determines the new IP address as the IP address of the network printer 100. Thus, in the auto IP method, whenever the link speed between the network printer 100 and the network switch A 300 is changed, the IP address of the network printer 100 is changed.

The change in the IP address of the network printer 100 may cause confusion to a user. Furthermore, the user may experience the inconvenience of having to manually input the IP address of the network printer 100 whenever the IP address of the network printer 100 is changed in a network environment in which the IP address of the network printer 100 needs to be manually input to the host 200 illustrated in FIG. 1.

Thus, when a method of assigning the IP address of the network printer 100 is an auto IP method, the network printer 100 may determine that the network environment of the network printer 100, which is reconfigured by changing a speed of the link established in operation 71, is a network environment that supports the auto IP method of automatically generating the IP address of the network printer 100 whenever the link speed between the network printer 100 and the network switch A 300 is changed. That is, in operation 72, the network printer 100 monitors a value indicating a method of assigning the IP address of the network printer 100. When the network printer 100 confirms that the method is the auto IP method, the network printer 100 determines that the network environment of the network printer 100, which is reconfigured by changing the speed of the link established in operation 71, is a network environment that supports the auto IP method of automatically generating the IP address of the network printer 100 whenever the link speed between the network printer 100 and the network switch A 300 is changed.

In operation 73, when the network printer 100 determines that the network environment of the network printer 100 is a network environment that supports the auto IP method in operation 72 (for example, when the value indicating the method of assigning the IP address of the network printer 100 indicates the auto IP method), a function to change the link speed in the sleep mode of the network printer 100 is disabled. In operation 74, when the network printer 100 determines that the network environment of the network printer 100 is not a network environment that supports the auto IP method in operation 72 (for example, when the value indicating the method of assigning the IP address of the network printer 100 does not indicate the auto IP method), the function to change the link speed in the sleep mode of the network printer 100 is enabled. That is, the function to change the link speed is enabled or disabled according to a determination of whether the network environment of the network printer 100 is a network environment that supports the auto IP method.

In more detail, a portion of the storage unit 120 may include a flag in which a value indicating the method of assigning the IP address of the network printer 100 is recorded. That is, an auto IP method flag that is stored in the storage unit 120 is a value indicating the IP address of the network printer 100 is completely assigned using the auto IP method. For example, when the IP address of the network printer 100 is completely assigned by using the auto IP method, the network printer 100 sets the value of the flag indicating the method of assigning the IP, which is stored in the storage unit 120, as the value indicating the auto IP method. The function to change the link speed in the sleep mode of the network printer 100 is disabled by setting the value of the flag as the value indicating the auto IP method. That is, the flag is set so as to disable the function to change the link speed in the sleep mode. The function to change the link speed in the sleep mode of the network printer 100 is enabled by setting the value of the flag as another value.

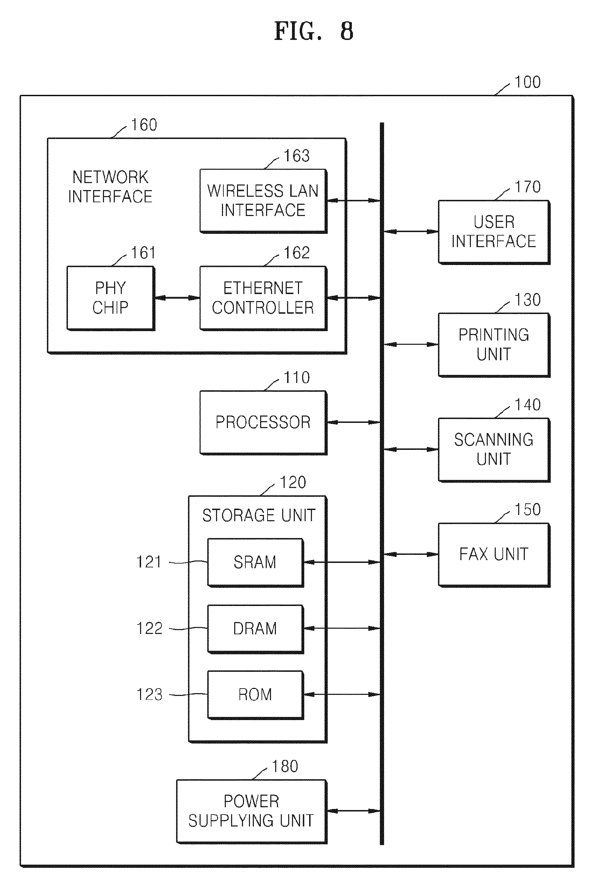

FIG. 8 is a block diagram illustrating the network printer 100 of FIG. 2, according to exemplary embodiments of the present invention. FIG. 8 illustrates an example in which the network printer 100 of FIG. 2 is included in an Ethernet environment. Thus, although omitted, the detailed description of the network printer 100 of FIG. 2 is also applied to the network printer 100 of FIG. 8. Hereinafter, the network printer 100 will be described in terms of the example in which the network printer 100 of FIG. 2 is included in an Ethernet environment.

The network interface 160 includes a PHY chip 161, an Ethernet controller 162, and a wireless LAN (Local Area Network) interface 163. The PHY chip 161 establishes an Ethernet link between the network printer 100 and the network switch A 300 in the normal node of the network printer 100 and changes a speed of the Ethernet link between the network printer 100 and the network switch A 300 in the sleep mode of the network printer 100. The Ethernet controller 162 processes transmission and receipt of at least one packet in an Ethernet layer by controlling the PHY chip 161. The wireless LAN interface 163 interfaces communication between the network printer 100 and devices on a wireless LAN.

According to the above-described embodiments of the present invention, the processor 110 controls the PHY chip 161 via the Ethernet controller 162 or directly controls the PHY chip 161. That is, the processor 110 determines whether the network environment of the network printer 100, which is reconfigured by changing the link speed of the network printer 100, satisfies the above-described conditions. According to the determination result, the processor 110 may control the PHY chip 161 so that the link speed of the network printer 100 may be automatically changed. The network printer 100 illustrated in FIG. 8 corresponds to a case where the network printer 100 described with reference to FIGS. 1 through 7 is embodied in software form, instead of hardware form. However, the network printer 100 described with reference to FIGS. 1 through 7 may be embodied in hardware form. When the network printer 100 is embodied in software form, manufacturing costs of the network printer 100 are reduced and development time of the network printer 100 is decreased, compared with when the network printer 100 is embodied in hardware form. However, when the network printer 100 is embodied in hardware form, the network printer 100 has increased performance, compared with when the network printer 100 is embodied in software form.

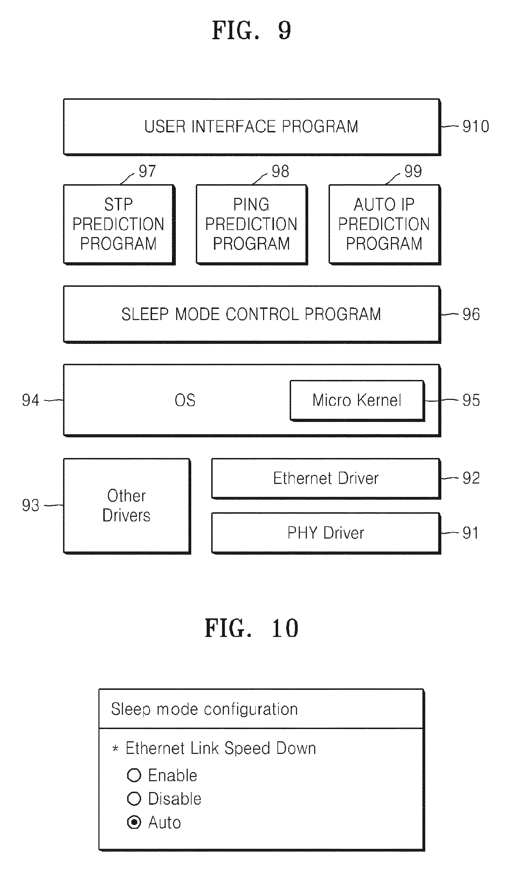

FIG. 9 is a block diagram illustrating a software stack stored in the storage unit 120 of the network printer 100 illustrated in FIG. 8, according to exemplary embodiments of the present invention. Referring to FIG. 9, a PHY driver 91, an Ethernet driver 92, other drivers 93, an operating system 94, a micro kernel 95, a sleep mode control program 96, a STP determination program 97, a ping determination program 98, an auto IP determination program 99, and a user interface program 910 are stored in the storage unit 120. The PHY driver 91 may control the PHY chip 161, may control link establishment by changing values of registers in the PHY chip 161, and may control a change of link speed. The Ethernet driver 92 may control the Ethernet controller 162 and may control transmitting and receiving a packet in an Ethernet layer by changing values of registers in the Ethernet controller 162. The operating system 94 is an embedded operating system and/or any suitable operating system to carry out the exemplary embodiments of the present invention and to drive the network printer 100. The micro kernel 95 may be a minimum operating system obtained by collecting one or more functions (e.g., basic functions that may include, for example, one or more input/output functions, file management functions, power management functions, etc.) from the operating system 94.

The sleep mode control program 96 is an application program, that, when executed by the processor 110, performs the controlling method illustrated in FIG. 4. The STP determination program 97 is an application program that includes the controlling method illustrated in FIG. 5. The ping determination program 98 is an application program that, when executed by the processor 110, performs the controlling method illustrated in FIG. 6. The auto IP determination program 99 is an application program, that, when executed by the processor 110, performs the controlling method illustrated in FIG. 6. The user interface program 910 is an application program to drive the user interface 170 of the network printer 100 illustrated FIG. 8.

As illustrated in FIG. 8, the storage unit 120 can include a static random access memory (SRAM) 121, a dynamic random access memory (DRAM) 122, and a read only memory (ROM) 123. The SRAM 121 is a non-volatile memory that records data only when power is supplied to the SRAM 121, but does not have to be periodically refreshed, unlike the DRAM 122. Although the DRAM 122 is a volatile memory that has to be periodically refreshed, since the DRAM 122 is inexpensive, the DRAM 122 is mainly used in a large-capacity memory. The ROM 123 is a non-volatile memory in which firmware such as an operating system, a device driver, or the like is stored. Since other non-volatile memories may not be included in the storage unit 120 illustrated in FIG. 8, the above-described application programs are stored in the ROM 123. Those of ordinary skill in the art may appreciate that the storage unit 120 illustrated in FIG. 8 may include other storage media such as a hard disk, a solid state drive, a flash memory, and the like, and that application programs may be stored in the storage unit 120.

In the normal mode of the network printer 100, the processor 110 calls the firmware, the application program, and the like stored in the ROM 123 to the DRAM 122 so as to control the operation of the network printer 100. To reduce power consumption of the network printer 100, in the sleep mode of the network printer 100, the processor 110 performs one or more predetermined functions. The processor 110 can change the operation state of the network printer 100 from the sleep mode to the normal mode by calling the micro kernel 95 stored in the ROM 123 to the SRAM 121 so as to control the operation of the network printer 100 without using the DRAM 122. In the sleep mode, the DRAM 122 is self-refreshed. In order to reduce the power consumption of the network printer 100 in the sleep mode, the network interface 160, the processor 110, and the SRAM 121 illustrated in FIG. 8 may be manufactured in a system-on-chip (SOC) form. In the sleep mode, the power supplying unit 180 supplies power to the SOC and the user interface 170 according to control of the processor 110, and thus the power consumption of the network printer 100 may be reduced. The processor 110 may reduce the power consumption of the network printer 100 in the sleep mode by operating the network printer 100 at a predetermined clock cycle (e.g., a relatively low clock cycle).

FIG. 10 illustrates an exemplary display screen that may be displayed by the user interface 170 of the network printer 100, according to exemplary embodiments of the present invention. Referring to FIG. 10, the processor 110 drives and/or executes the user interface program 910 stored in the storage unit 120 of the network printer 100 so that the user interface 170 may display a display screen including a plurality of selectable configuration options (e.g., three selection icons, such as "enable", "disable", and "auto" as illustrated in FIG. 10). When a user selects an enable option from the display screen, the network printer 100 reduces a link speed of the network printer 100 in the sleep mode. In exemplary embodiments of the present invention, the network printer 100 always reduces the link speed when the enable option selection is received. Thus, the power consumption of the network printer 100 may be reduced. When a selection of the disable option is received, the network printer may maintain the link speed of the network printer 100 and may not change the link speed when the network printer 100 is in the sleep mode. In exemplary embodiments of the present invention, the when user selects a disable option from the display screen, the network printer 100 always maintains the link speed of the network printer 100 without changing the link speed of the network printer 100 in the sleep mode. When the user selects an auto option from the display screen, the network printer 100 determines whether the network environment of the network printer 100, which is reconfigured by changing the link speed, satisfies the above-described condition. According to the determination result, the link speed of the network printer 100 is reduced.

When the user selects the auto option that is displayed, the user interface 170 may indicate the determination result about whether the network environment of the network printer 100, which is reconfigured by changing the link speed of the network printer 100, satisfies the above-described conditions. Thus, even when the network environment of the network printer 100 satisfies the above-described conditions, the user may confirm the determination result so that the link speed of the network printer 100 may be reduced.

According to the above-described exemplary embodiments of the present invention, when the network printer 100 receives a packet of a STP, or a time taken to receive a response message of a ping request message is greater than a threshold time, the network printer 100 determines that it takes a predetermined long period of time to reconfigure a network environment of an image forming apparatus by changing the link speed between the network printer 100 and the network switch A 300. Thus, the link speed is maintained, rather than being changed, in the sleep mode of the network printer 100. When the network printer 100 does not receive the packet of the STP, and the time taken to receive the response message of the ping request message is smaller than a predetermined threshold time, the network printer 100 determines that the network environment of the image forming apparatus is reconfigured by changing the link speed between the network printer 100 and the network switch A 300, and changes the link speed in the sleep mode of the network printer 100. As such, by selectively changing the link speed between the network printer 100 and the network switch A 300 according to a time taken to restore the network environment of the image forming apparatus, the power consumption of the network printer 100 may be reduced while minimizing side effects from a reduction in the link speed.

When the method of assigning the IP address of the network printer 100 is the auto IP method, the network printer 100 determines that the current network environment is a network environment of which an IP address is changed whenever the link speed of the network printer 100 is changed and the link speed of the network printer 100 is maintained rather than being changed. When the method of assigning the IP address of the network printer 100 is not the auto IP method, the link speed of the network printer 100 is changed in the sleep mode of the network printer 100. As such, by selectively changing the link speed of the network printer 100 according to whether the method of assigning the IP address of the network printer 100 is the auto IP method, the power consumption of the network printer 100 may be effectively reduced while minimizing side effects caused due to a reduction in the link speed.

Based on a determination result of whether a network environment of an image forming apparatus, which is reconfigured by changing a link speed between the image forming apparatus and an external device, satisfies at least one predetermined condition, side effects from reconfiguring a network environment of a network printer may be minimized and/or prevented by controlling a change in the link speed in a sleep mode.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present invention can be easily construed by programmers skilled in the art to which the present invention pertains.

Although several embodiments of the present invention have been shown and described, it will be appreciated by those skilled in the art that changes may be made in these embodiments without departing from the principles of the invention, the scope of which is defined in the appended claims.

## Claims

1. A method of controlling a link speed in an image forming apparatus to reduce power consumption of the image forming apparatus by changing the link speed of the image forming apparatus, the method comprising:
establishing a link between the image forming apparatus and an external device in a normal mode of the image forming apparatus;
determining whether a network environment of the image forming apparatus, which is reconfigured by changing a speed of the established link, satisfies at least one predetermined condition; and
disabling a function of changing the speed of the established link in a sleep mode of the image forming apparatus, based on a result of the determining.

2. The method of claim 1, wherein the determining comprises:
determining whether the reconfigured network environment is a network environment of which reconfiguration is postponed by a predetermined protocol that is driven whenever the speed of the established link is changed.

3. The method of claim 2, wherein the predetermined protocol is a spanning-tree protocol to prevent looping that occurs between the external device and another device connected to the external device.

4. The method of claim 3, wherein, the determining comprises:
when a packet of the spanning tree protocol is received, determining that the reconfigured network environment is the network environment of which reconfiguration is postponed by the spanning tree protocol.

5. The method of claim 1, wherein the determining comprises:
determining whether the reconfigured network environment is a network environment of which reconfiguration is postponed by postponement of a restart of network communication of the image forming apparatus, which is disconnected whenever the speed of the established link is changed.

6. The method of claim 5, wherein the determining comprises:
when a time taken to receive a response message after transmission of a predetermined message is greater than a threshold time, determining that the reconfigured network environment is a network environment of which reconfiguration is postponed by the restart of network communication of the image forming apparatus.

7. The method of claim 6, wherein the predetermined message is a ping request message to test whether the predetermined message reaches a destination device.

8. The method of claim 1, wherein the determining comprises:
determining whether the reconfigured network environment of the image forming apparatus is a network environment that supports an auto Internet protocol (IP) method of automatically generating an IP address of the image forming apparatus whenever a speed of the established link is changed.

9. The method of claim 8, wherein the determining comprises:
when a method of assigning an IP address of the image forming apparatus is an auto IP method, determining that the established network environment of the image forming apparatus is a network environment supporting the auto IP method.

10. A computer readable recording medium having recorded thereon a program, that when executed by a computer, provides a method of controlling a link speed in an image forming apparatus to reduce power consumption of the image forming apparatus by changing the link speed of the image forming apparatus, the method comprising:
establishing a link between the image forming apparatus and an external device in a normal mode of the image forming apparatus;
determining whether a network environment of the image forming apparatus, which is reconfigured by changing a speed of the established link, satisfies at least one predetermined condition; and
disabling a function of changing the speed of the established link in a sleep mode of the image forming apparatus, based on a result of the determining.

11. An apparatus to control a link speed in an image forming apparatus to reduce power consumption of the image forming apparatus by changing the link speed of the image forming apparatus, the apparatus comprising:
a network interface to establish a link between the image forming apparatus and an external device in a normal mode of the image forming apparatus; and
a processor to determine whether a network environment of the image forming apparatus, which is reconfigured by changing a speed of the established link, satisfies at least one predetermined condition, and to disable a function to change the speed of the established link in a sleep mode of the image forming apparatus, based on a result of the determination.

12. The apparatus of claim 11, wherein the processor determines whether the reconfigured network environment is a network environment of which reconfiguration is postponed by a predetermined protocol that is driven whenever the speed of the established link is changed.

13. The apparatus of claim 12, wherein the predetermined protocol is a spanning-tree protocol to prevent looping that occurs between the external device and another device connected to the external device.

14. The apparatus of claim 11, wherein the processor determines whether the reconfigured network environment is a network environment of which reconfiguration is postponed by postponement of a restart of network communication of the image forming apparatus, which is disconnected whenever the speed of the established link is changed.

15. The apparatus of claim 11, wherein the processor determines whether the reconfigured network environment of the image forming apparatus is a network environment that supports an auto Internet protocol (IP) method of automatically generating an IP address of the image forming apparatus whenever a speed of the established link is changed.
